# EUROPEAN PATENT SPECIFICATION

(11) **EP 3 087 019 B1**
(45) Date of publication and mention of the grant of the patent: **05.04.2017**
(21) Application number: 14828520.8
(22) Date of filing: 28.11.2014
(51) Int. Cl.: B29D 30/00, B65H 75/44, B65H 16/02

(54) **METHOD AND DEVICE FOR MANAGING ELONGATE ELEMENTS IN A PLANT FOR BUILDING TYRES**
VERFAHREN UND VORRICHTUNG ZUR VERWALTUNG LÄNGLICHER ELEMENTE IN EINER ANLAGE ZUR HERSTELLUNG VON REIFEN
PROCÉDÉ ET DISPOSITIF PERMETTANT DE GÉRER DES ÉLÉMENTS ALLONGÉS DANS UN ÉQUIPEMENT PERMETTANT DE FABRIQUER DES PNEUS

(30) Priority: 23.12.2013 IT PD20130357
(43) Date of publication of application: 02.11.2016
(73) Proprietor: Pirelli Tyre S.p.A., 20126 Milano (IT)
(72) Inventor: BIGOGNO, Marco, I-20126 Milano (IT); SIMONATO, Giovanni, I-20126 Milano (IT)
(74) Representative: Susanetto, Carlo
(86) International application number: PCT/IB2014/066415
(87) International publication number: WO 2015/097578

(56) References cited:
- EP-A1- 0 273 847
- EP-A1- 1 731 458
- EP-A2- 1 295 706
- US-A- 3 391 876
- US-A- 4 116 401
- US-A- 5 337 972
- US-A1- 2012 312 451

## Description

The present invention relates to a method and a device for managing the storing and supply of elongate elements in a tyre building plant.

A tyre generally comprises a carcass structure which is formed toroidally about an axis of rotation and which includes at least one carcass ply which has end rims which are axially opposed and which engage in annular securing structures, generally known as "rings", which are integrated in the zones usually referred to as "beads", respectively.

In a radially external position with respect to the carcass structure, there is provided a belt structure comprising one or more belt layers which are arranged so as to radially overlap with respect to each other and with respect to the carcass structure.

The belt structure may further comprise, in a radially external position, at least at the ends of the belt strips below, a layer of textile or metal cords which are arranged circumferentially (at 0 degrees). In tyres of the tubeless type there is further provided a radially internal layer, which is referred to as a liner, and which has impermeability characteristics in order to ensure the air-tightness for the tyre itself.

In a radially external position with respect to the belt structure, there is applied a tread band which is produced from elastomer material and on which there is defined a tread surface which is intended for contact with the road surface.

At the lateral surfaces of the carcass structure, each extending from one of the lateral edges of the tread face as far as a location at the respective annular securing structure with respect to the beads, sidewalls of elastomer material are further applied in an axially external position, respectively.

A process for producing tyres provides for a first tyre building step, in which the various components of the tyre, including those set out above, are assembled in one or more building stations so as to obtain a so-called "green" tyre, and a subsequent moulding and vulcanizing step, where the green tyre is subjected to temperature and pressure values so as to vulcanize the elastomer material of the components thereof, obtaining the final structural stability of the tyre.

The term "elastomer material" is intended to refer to a composition comprising at least one elastomer polymer and at least one reinforcing filler. That composition preferably further comprises additives such as cross-linking and/or plasticizing agents. Owing to the presence of the cross-linking agents, that material may be cross-linked by means of heating so as to form the final manufactured product.

The term "elongate element" is intended to refer to an element in which one dimension is predominant with respect to the remaining dimensions. Said elongate element is preferably of elastom er material or comprises additional structural elements. Said elongate element is preferably dispensed on a forming drum in order to form at least one component of a tyre.

The elongate element is preferably of strip-like form with a flattened cross-section. Preferably, the additional structural elements comprise one or more textile or metal reinforcement cords. Those reinforcement cords are preferably arranged in a mutually parallel manner and preferably extend in the longitudinal direction of the same elongate element. In a preferred alternative form, said elongate element is formed by a service fabric, as will be better defined below.

WO 2009/068939 describes a carcass ply which is built on a forming drum by applying a plurality of elongate elements. Those elongate elements, before they are used in the tyre building step, are typically wound in bobbins, in order to make their transport and storage easier, from which they then have to be unwound in order to be supplied to the specific tyre building station in which they are used.

WO 2009/040597 in the name of the same Applicant illustrates a plant and a method for producing tyres in which different independent production units are suitably integrated into and synchronized with each other in order to build different types and sizes of tyre. The method described in that document provides for the use of different elongate elements for each tyre produced, which are supplied by supply units which are operationally associated with the building stations.

EP 273847 discloses an exemplary plant for producing tyres according to the prior art.

The Applicant notes that, in order to avoid undesirable phenomena of mutual adhesion between successive turns of the elongate element wound on the bobbin, the elongate element is often connected, at least at one side, to a service fabric. In order to carry out the unwinding operation of the elongate element from the bobbins, there are used unwinding devices which are specifically arranged to pull the elongate element from the bobbin, separate it from the service fabric, make it available to the building station and, finally, collect the service fabric on a dedicated service bobbin.

The Applicant has further observed that, in the building plants such as those described in WO 2009/040597, which are intended to build tyres with requirements which are technologically very different from each other, there are used different types of elongate elements which have to be suitably supplied in succession to the building station.

In that context, the Applicant has observed that this involves the use of a high number of bobbins, given that for many types of elongate elements it is typically necessary to have a main bobbin, on which there is wound the elongate element which is connected to the service fabric to be supplied to the building station, and a service bobbin on which there is collected the service fabric once it has been separated from the elongate element.

The Applicant has further observed how the high number of bobbins makes the movement of the bobbins themselves from the store to the building station, and vice versa, complicated and troublesome. Furthermore, the high number of bobbins requires great spaces and volumes inside the store with resultant high management costs.

Not least, the high number of bobbins also impairs the assembly times and disassembly times of the relevant bobbins on the unwinding devices which are associated with the building station.

On the basis of those observations, the Applicant has felt it necessary to reduce the number of bobbins necessary for the tyre building process so as to drastically reduce the disadvantages associated with the management thereof.

The Applicant has perceived that the construction of a device comprising at least two zones which are intended to receive separate windings of elongate elements, those zones being rotatable in a mutually independent manner, allows a reduction in the number of bobbins without modifying the process of building the tyre, and consequently without modifying the number of total elongate elements to be managed overall.

The Applicant has further observed that the transport, movement and storage operations of the device for managing the storage and supply of the elongate elements are simple and reliable when bobbins in the form of a single body are provided and can be handled individually without zones which are freely rotatable with respect to each other.

The Applicant has therefore found that, by constructing a storage and supply device which is provided with at least two zones which are intended to separately receive different windings of elongate elements and in which said zones are independently rotatable with respect to each other and, where applicable, fixedly joined to each other in terms of rotation so as to form a unit which can be handled individually, the requirements described can be complied with.

In particular, in a first aspect thereof, the invention relates to a method for managing elongate elements in a plant for building according to claim 11.

Said method preferably comprises the provision of a device for storing and supplying at least one elongate element comprising a first rotation shaft and a second rotation shaft which are coaxial with each other.

Preferably, the first rotation shaft and the second rotation shaft can be controlled selectively between a first operating configuration, in which said first rotation shaft and said second rotation shaft are fixedly joined to each other in terms of rotation, and a second operating configuration, in which said first rotation shaft and said second rotation shaft can freely rotate independently of each other.

Preferably, said first rotation shaft and said second rotation shaft are maintained in said first operating configuration when said device is in storage and transport operation.

Preferably, said first rotation shaft and said second rotation shaft are moved into said second operating configuration when said device is in the course of winding or unwinding at least one elongate element on or from said first rotation shaft or said second rotation shaft.

In a second aspect thereof, the invention relates to a device for storing and supplying at least one elongate element in a plant for building tyres according to claim 1.

Preferably, said device comprises at least one bobbin which can be moved about a rotation axis.

Preferably, said at least one bobbin comprises a first zone which is able to receive a first winding of a first elongate element, and a second zone which is able to receive a second winding of a second elongate element. Preferably, said bobbin comprises a first rotation shaft which extends along said rotation axis and which is associated with said first zone in order to wind or unwind said first winding.

Preferably, said bobbin comprises a second rotation shaft which is associated with said second zone in order to wind or unwind said second winding.

Preferably, said bobbin comprises an engaging device which is provided between said first rotation shaft and said second rotation shaft and which can be selectively controlled between a first operating configuration, in which said first rotation shaft and said second rotation shaft are fixedly joined to each other in terms of rotation, and a second operating configuration, in which said first rotation shaft and said second rotation shaft can freely rotate independently of each other. The Applicant considers that, as a result of the features set out above of the method for managing the elongate elements and the device for storing and supplying them, the same bobbin may be used to wind and/or unwind a plurality of elongate elements in an independent manner, multiplying the possible combinations of elongate elements which are dispensed at the building station and consequently increasing the flexibility of the building process. At the same time, however, the bobbin may be configured as a unit which can be handled individually so as to readily be able to be managed during storage and transport operations.

The above-described method and device therefore allow a substantial reduction in the number of bobbins intended to be managed to be obtained, with obvious operational advantages during the storage step, by reducing the overall burden in terms of the storage volume, and during the step of moving the bobbin to and from the tyre building station and, finally, during the step of assembling and disassembling the bobbin at the building station.

The present invention, in at least one of the aspects thereof, may have at least one of the preferred features indicated below.

In a preferred embodiment, said engaging device comprises a first engaging element which is fixedly joined in terms of rotation to said first rotation shaft and a second engaging element which is fixedly joined in terms of rotation to said second rotation shaft.

Preferably, said first engaging element is movable with respect to said first rotation shaft towards and away from said second engaging element in order to disengage from said second engaging element or to engage therewith in a coupling manner.

In that manner, the fixing or the free relative rotation of the two zones of the bobbin is obtained by means of a simple and inexpensive mechanism which is at the same time, however, reliable and effective. Preferably, said first engaging element is resiliently urged towards the second engaging element in engagement with said second engaging element.

As a result of this feature, the engaging device, in the absence of external urging, is maintained in the first operating configuration so that the bobbin, having the two zones fixedly joined to each other in terms of rotation, can be more readily moved and stored in a store.

In a preferred embodiment, said first engaging element is coaxially received inside said first rotation shaft with the ability to slide axially in a manner limited with respect to said first rotation shaft.

In this manner, the engaging device is completely retained inside the space defined by the rotation shafts so as not to increase the total spatial requirement of the storage and supply device. Furthermore, the engaging device remains in a hidden and protected position inside the rotation shafts, ensuring the protection thereof from undesirable impacts and from dangerous external, accidental operations.

In another preferred embodiment, said rotation shaft is supported rotatably on said first rotation shaft.

Preferably, said first rotation shaft comprises a central core and a first sleeve for supporting said first winding, said first sleeve being fixed coaxially to said central core and having a diameter greater than said central core.

In a greatly preferred manner, said second rotation shaft is rotatably supported on said central core of said first rotation shaft.

As a result of those features, the central support of the bobbin has a compact and solid configuration.

In a preferred embodiment, said second rotation shaft has a diameter substantially equal to said first sleeve.

Preferably, said second rotation shaft is axially staggered and in a position adjacent to said first sleeve.

In that manner, the bobbin, in a variant thereof without any internal flanges, may have a substantially continuous, cylindrical support surface. That feature makes it possible to use the bobbin in a conventional manner, with the zones being fixedly joined to each other, as a support for a single winding of elongate element.

In a preferred embodiment, at a first axial end of said bobbin, said first rotation shaft comprises a first hub which is able to be supported on an external support of said storage and supply device.

Preferably, there is formed on said first hub a first seat for receiving in engagement a first coupling element of a first driving member which is provided to rotate said first zone of said bobbin.

In a greatly preferred manner, said first seat has a non-circular cross-section in order to secure in terms of rotation said first rotation shaft to said first driving member when said first coupling element is inserted in said first seat.

In this manner, it is possible to impart the desired rotation to the first rotation shaft and, consequently, to the first zone of the bobbin. Furthermore, if the engaging device is positioned in the second operating configuration, the rotation of the first zone may be controlled independently of the rotation of the second zone whilst, if the engaging device is retained in the first operating configuration, the first driving member may rotate both the zones at the same time.

In another preferred embodiment, at a second axial end of said bobbin, said second rotation shaft comprises a second hub which is able to be supported on an external support of said storage and supply device. Preferably, there is formed on said second hub a second seat for receiving in engagement a second coupling element of a second driving member which is provided to rotate said second zone of said bobbin.

In a greatly preferred manner, said second seat has a non-circular cross-section in order to secure in terms of rotation said second rotation shaft to said second driving member when said second coupling element is inserted in said second seat.

In this manner, it is possible to impart the desired rotation to the second rotation shaft and, consequently, to the second zone of the bobbin. Furthermore, if the engaging device is positioned in the second operating configuration, the rotation of the second zone may be controlled independently of the rotation of the first zone.

In a preferred embodiment, said second seat is axially open and in communication with said first engaging element, so that the insertion in said second seat of said second coupling element of said second driving member brings about the movement of said first engaging element so as to disengage from said second engaging element.

As a result of this feature, the movement of the engaging device from the first operating configuration to the second operating configuration is brought about in an "automatic" manner at the time of connection of the bobbin with respect to the second driving member. This ensures that the two zones are made independent in terms of rotation only at the time of the winding and unwinding operations of the elongate elements and not during the steps of moving and storing the bobbin. Furthermore, it becomes possible to select between a mode for supplying the bobbin with the zones fixedly joined in rotation, by connecting the bobbin only to the first driving member, and a mode for supplying the bobbin with the zones rotatable in an independent manner, by connecting the bobbin to the second driving member and, optionally, to the first driving member.

Preferably, said first seat and said second seat have non-circular cross-sections which are mutually different.

In that manner, the first and second driving members may be connected to the first and second hubs in a unique manner, preventing the possibility that the first zone may be connected to the second driving member, and vice versa, so that the rotation of each driving member may be programmed independently of each other.

In a preferred embodiment, external flanges for supporting said bobbin are mounted on said first rotation shaft and on said second rotation shaft, respectively.

Preferably, said external flanges are mounted in the region of said first hub and said second hub, respectively.

In this manner, the windings may be adequately delimited and separated towards the axially external side of the bobbin.

Furthermore, when the flanges have a circular form and a suitable diameter substantially identical to each other, the bobbins may be moved by means of rolling, in a state supported on the external edge of the external flanges.

In another preferred embodiment, at least one internal flange for separation between said first zone and said second zone of said bobbin is/are mounted on said first rotation shaft or on said second rotation shaft.

In this manner, the windings may be adequately delimited and separated towards the axially internal side of the bobbin.

Preferably, said second rotation shaft is coaxial with said first rotation shaft.

In a preferred embodiment, said storage and supply device supplies said at least one elongate element to at least one tyre building station.

Preferably, said storage and supply device supplies to said building station a first elongate element which is wound on said first rotation shaft and a second elongate element which is wound on said second rotation shaft.

In this manner, it is possible to use the same storage and supply device to dispense the same elongate element simultaneously to two different building stations or to the same building station.

In a preferred embodiment, said second elongate element is different from said first elongate element.

In this manner, it is possible to use the same storage and supply device to dispense two different elongate elements to the building station without having to replace the bobbin.

In a preferred embodiment of the invention, said storage and supply device supplies a first elongate element to said building station by unwinding it from one of said first and second rotation shafts and takes a second elongate element by winding it on the other of said first and second rotation shafts.

Preferably, said second elongate element is a service fabric which is coupled to said first elongate element when it is wound on said first or second rotation shaft.

Preferably, said service fabric is separated from said first elongate element when it is unwound from said first or second rotation shaft in order to be supplied to said building station.

In this manner, the storage and supply device may be used to dispense an elongate element to the building station without any need to provide an auxiliary bobbin which collects the service fabric thereof.

In a preferred embodiment of the invention, said first rotation shaft or said second rotation shaft is urged into said first operating configuration by a resilient element which is provided in said storage and supply device.

According to another preferred embodiment of the invention, said movement into said second operating configuration is brought about by coupling said first rotation shaft or said second rotation shaft with respect to at least one driving member which is provided to rotate said storage and supply device about a rotation axis.

As a result of this feature, the first and second rotation shaft are made independent in terms of rotation only when the storage and supply device is ready to dispense an elongate element at the building station. Preferably, said first rotation shaft and said second rotation shaft are caused to rotate by a first and a second driving member, respectively, and said movement into said second operating configuration is brought about by coupling only one of said first or second driving member with respect to the first or second rotation shaft, respectively.

In this manner, it is possible to select whether to operate the storage and supply device with the first and second rotation shaft fixedly joined to each other, as if it were provided with a single shaft, in the same manner as a conventional storage and supply device, or to operate the storage and supply device with the first and second rotation shaft independent of each other, in accordance with the teaching of the present invention.

The features and advantages of the invention will be more clearly appreciated from the detailed description of a preferred embodiment thereof which is illustrated by way of non-limiting example with reference to the appended drawings, in which:

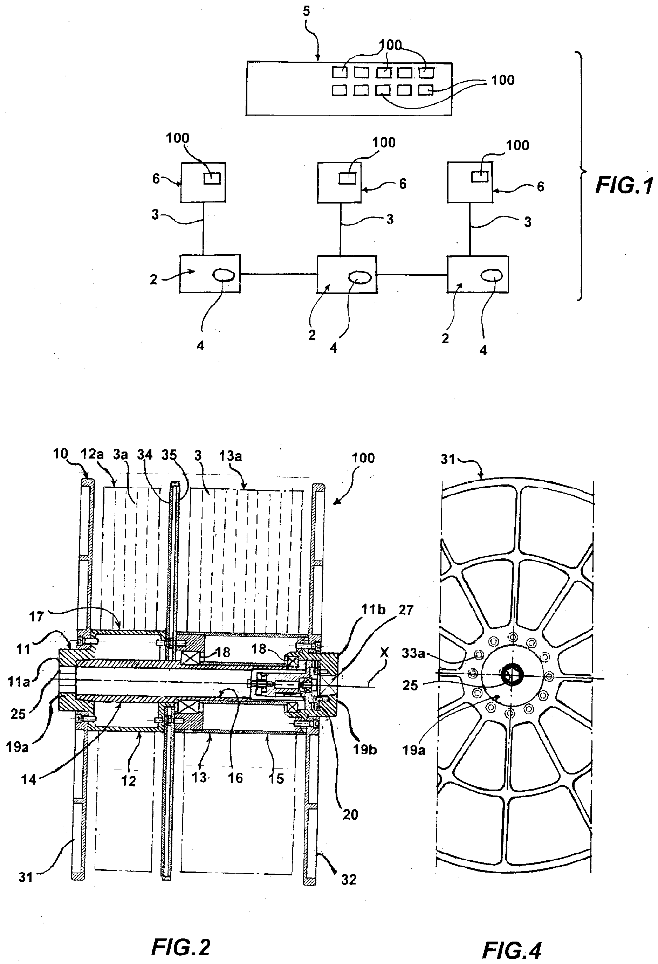

- Figure 1 is a schematic plan view of a tyre building plant which is constructed to operate in accordance with the method of the present invention;
- Figure 2 is an axially sectioned schematic view of a storage and supply device for an elongate element, which device is used in the building plant of Figure 1 ;
- Figure 3 is a side view from the right of the storage and supply device of Figure 2;
- Figure 4 is a partial side view from the left of the storage and supply device of Figure 2;

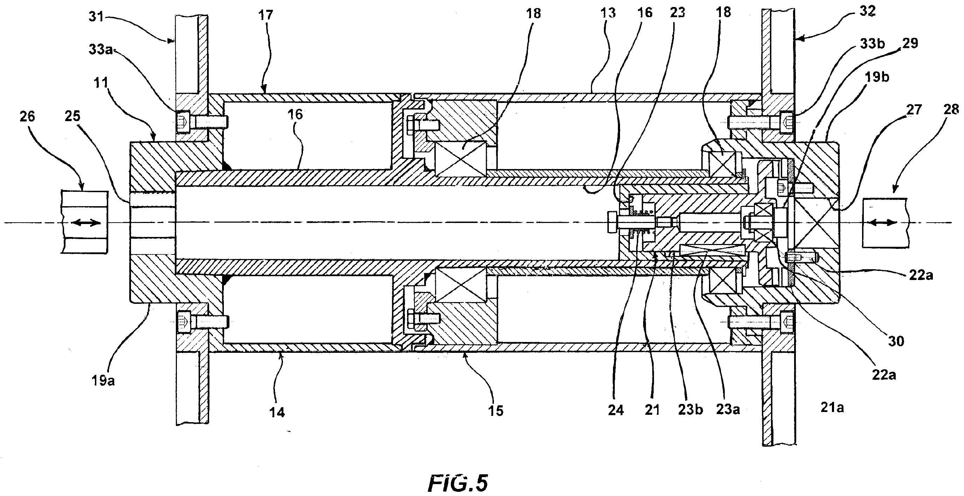

- Figure 5 is a schematic axial section, drawn to an enlarged scale, of the storage and supply device of Figure 2 without the internal flanges;
- Figure 6 is a schematic side view of a detail of the storage and supply device of Figure 2;
- Figure 7 is an axial section of a first construction variant of the storage and supply device of Figure 2; and
- Figure 8 is an axial section of a second construction variant of the storage and supply device of Figure 2.

With reference to the appended Figures, there is generally designated 1 a tyre building plant which is constructed to operate in accordance with the method of the present invention.

The plant 1 comprises at least one building station 2, in which an elongate element 3 is dispensed onto the radially external surface of a forming drum 4, or of a component of the tyre which is provided thereon.

The elongate element 3, before it is supplied to the building station 2, is wound on bobbins 10 of respective storage and supply devices which are designated 100 and which are conveniently stored in a store 5. When required, the storage and supply device 100 is then transported in the region of the building station 2 and mounted on an unwinding device 6 which provides for the elongate element 3 to be unwound from the bobbin 10 and for it to be made available to the building station 2. The elongate element 3 may be, for example, a continuous strip of elastomer material which is provided with reinforcement cords in order to form a component of a belt structure of the tyre being processed. Naturally, there is provision for the elongate element to be able to be constituted only by elastomer material and/or by any other reinforcement element which is advantageous for building a tyre.

The elongate element 3 may further be connected to a service fabric 3a which prevents undesirable occurrences of adhesion of the elongate element 3 to itself when it is wound in successive turns on the bobbin 10.

The service fabric may be constructed from any suitable material, for example, from polyethylene, or other polymer materials, optionally processed, and may be formed into any suitable form, for example, in the form of a planar band or in the form of a planar band with raised longitudinal edges in accordance with the specific features of the elongate elements.

The storage and supply device 100 which is provided for supplying the elongate element 3 to the building station 2 comprises a bobbin 10, with a generally cylindrical shape, which extends about an axis of rotation X.

The bobbin 10 comprises a central support 11, which extends along the axis of rotation X, between opposing longitudinal ends 11a and 11 b, on which there are defined a first zone 12 which is capable of receiving a first winding 12a of an elongate element and a second zone 13 which is capable of receiving a second winding 13a of a different elongate element.

In particular, in the embodiment described here, the second winding 13a is formed by the elongate element 3 while the first winding 12a is formed by the service fabric 3a once it has been separated from the elongate element 3.

The windings 12a and 13a may be obtained in the form which is most advantageous in accordance with the requirements connected with the characteristics of the process or the elongate element, for example, each successive turn may be wound in an axially staggered manner with respect to the preceding turn or may be wound in a completely overlapping manner with respect to the preceding turn.

The first and second zones 12 and 13 are arranged one adjacent to the other in an axially staggered position and are separated from each other and, where applicable, are capable of rotating about the axis X independently of each other, in order to wind or unwind the first and second windings 12a, 13a, respectively, as explained in greater detail below.

The central support 11 of the bobbin 10 comprises a first rotation shaft 14 which extends along the axis of rotation X and which is associated with the first zone 12, a second rotation shaft 15 which is coaxial with the first rotation shaft 14 and which is associated with the second zone 13, and an engaging device 20 which is provided between the first and second rotation shafts 14, 15 in order to make the first and the second rotation shafts 14, 15 fixedly joined in terms of rotation or to make them independent of each other.

The first rotation shaft 14 comprises a central core 16, which is tubular and which extends between a first and a second axial end 11a and 11 b of the central support 11 and a first sleeve 17 which is fixed coaxially to the central core 16.

The first sleeve 17 has a diameter greater than the central core 16 and an axial dimension which is smaller, for example, between 30% and 60% of the length dimension of the central core 16 and is intended to support the first winding 12a.

The second rotation shaft 15 is supported in a rotatable manner on the central core 16 of the first rotation shaft 14 by means of a pair of bearings 18.

The second rotation shaft 15 is axially staggered and is in a position adjacent to the first sleeve 17 and further has a diameter substantially equal thereto.

At the first axial end 11a of the central support 11, the first rotation shaft 14 comprises a first hub 19a and similarly, at the second axial end 11b of the central support 11, the second rotation shaft 15 comprises a second hub 19b.

The first and second hubs 19a, 19b are provided and have such dimensions as to allow the bobbin 10 to be supported on an external support which is provided, for example, on an unwinding device 6 which is associated with the building station 2.

The engaging device 20 can be selectively controlled between a first operating configuration, in which the first rotation shaft 14 and the second rotation shaft 15 are fixedly joined to each other in terms of rotation, and a second operating configuration, which is illustrated in the appended Figures and in which the first rotation shaft 14 and the second rotation shaft 15 can freely rotate independently of each other. The engaging device 20 comprises a first engaging element 21 which is fixedly joined in terms of rotation to the first rotation shaft 14 and a second engaging element 22 which is fixedly joined in terms of rotation to the second rotation shaft 15.

The first engaging element 21 is received in a seat 23 which is formed coaxially inside the central core 16 of the first rotation shaft 14 at the end 11 b of the central support 11. The first engaging element 21 is received in the seat 23 with the ability to slide axially therein in a limited manner so as to be moved axially with respect to the first rotation shaft 14 towards and away from the second engaging element 22 so as to engage or disengage the second engaging element 22 and to move the engaging device 20 between the first and second operating configurations.

In the preferred embodiment described here, the first engaging element 21 is connected to the central core 16 of the first rotation shaft 14 by means of a key 23a which is fixedly joined to the first engaging element 21 which is engaged in an axial channel 23b which is formed in the seat 23, whose axial dimension is greater than the axial dimension of the key 23a.

The first engaging element 21 is further advantageously urged towards the second engaging element 22 by a spring 24, whose resilient action tends to maintain the engaging device 20 in the first operating position, with the engaging elements 21 and 22 being connected to each other. The second engaging element 22 is fixedly joined to the axially internal surface of the second hub 19b by means of screws 22b.

In the preferred embodiment described here, the engaging device 20 is of the type with frontal engaging, with the first and second engaging elements 21 and 22 comprising flanges which face each other, respectively, each of which carries a ring of front teeth 21 a, 22a which extend axially towards the other flange.

In an alternative variant which is not illustrated in the appended Figures, the engaging device 20 is of the friction type with the first and second engaging elements 21 and 22 comprising respective discs which are constructed from material having a friction coefficient which is relatively high. In this alternative variant, the spring 24 is dimensioned so as to apply to the first engaging element 21 a sufficient force to ensure sufficient friction to fixedly join the first rotation shaft 14 in terms of rotation to the second rotation shaft 15.

There is formed on the first hub 19a a first seat 25 for receiving in engagement a first coupling element 26 of a first driving member (not illustrated in the appended Figures) which is provided to rotate the bobbin 10 about the axis X.

Similarly, there is formed on the second hub 19b a second seat 27 for receiving in engagement a second coupling element 28 of a second driving member (not illustrated in the appended Figures) which is provided to rotate the bobbin 10 about the axis X.

Both the first seat 25 and the second seat 27 have non-circular cross-sections so as to secure in terms of rotation the first rotation shaft 14 to the first driving member when the first connection element 26 is received in the first seat 25 and the second rotation shaft 15 to the second driving member when the second connection element 28 is received in the second seat 27, respectively.

Preferably, the non-circular cross-sections of the first seat 25 and the second seat 27 are different from each other so that the connection to the driving members is defined in a unique manner, respectively. In the preferred embodiment described here, the first seat 25 has a hexagonal cross-section and the second seat 27 has a square cross-section. Furthermore, the second seat 27 is axially a through-hole so as to be in communication with the first engaging element 21 and to allow access thereto. In this manner, the insertion into the second seat 27 of the second connection element 28 of the second driving member determines the movement of the first engaging element 21 so as to be disengaged from the second engaging element 22.

In particular, the second connection element 28, as soon as the second hub 19b is passed, abuts a push rod 29 which is fixedly joined to the first engaging element 21 in terms of translation so that additional axial advance movement of the second connection element 28 inside the central support 11 involves the movement of the first engaging element 21 away from the second engaging element 22 counter to the action of the spring 24.

Preferably, the push rod 29 is connected to the first engaging element 21 by means of a bearing 30 so as to be able to rotate freely about the axis of rotation X. In this manner, the rotation of the second connection element 28 which controls the rotation of the second rotation shaft 15 is prevented from being able to be transmitted in any manner by means of the push rod 29 to the first engaging element 21, which is instead fixedly joined in terms of rotation to the first rotation shaft 14. Furthermore, this feature prevents sliding between the connection element 28 and the push rod 29, preventing undesirable phenomena of wear thereof.

The bobbin 10 may further comprise external flanges 31 and 32 which are mounted on the first rotation shaft 14 and on the second rotation shaft 15, respectively. In particular, the external flanges 31 and 32 are fixed in a removable manner at the first and second hubs 19a, 19b by means of screws 33a and 33b.

Furthermore, internal flanges 34 and 35 for separation between the first zone and second zone 12 and 13 of the bobbin 10 are mounted on the first rotation shaft 14 and on the second rotation shaft 15 in a removable manner, respectively.

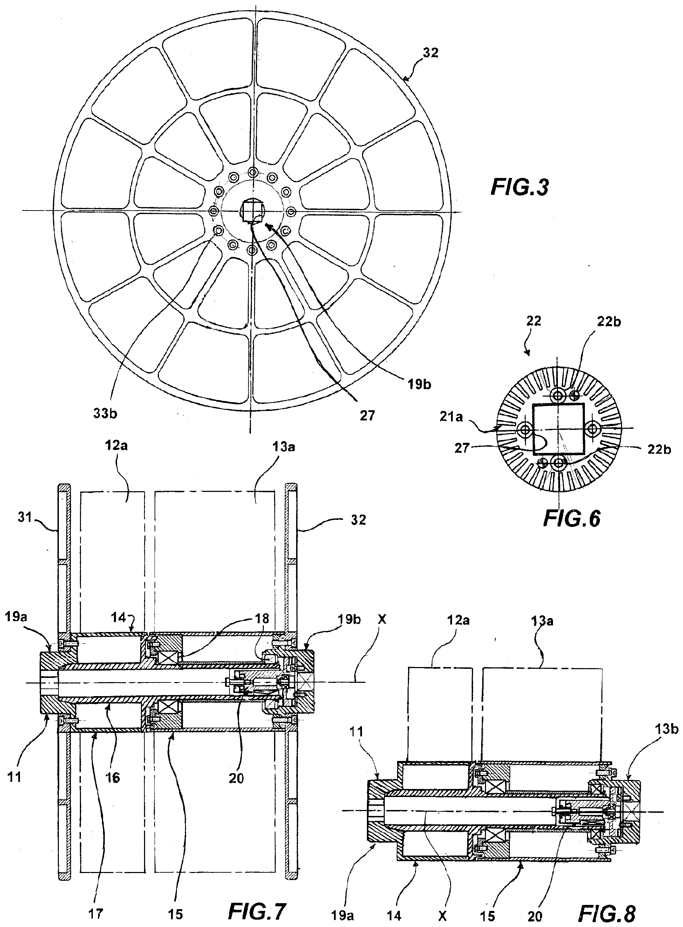

In the first construction variant illustrated in Figure 7, the bobbin 10 does not have any internal flanges 34 and 35 while, in the second construction variant illustrated in Figure 8, the bobbin 10 does not have either the internal flanges 34 and 35 or the external flanges 31 and 32. In those variants, the cylindrical surface defined by the first sleeve 17 and the second rotation shaft 15 is substantially continuous and does not have any shoulders.

When the storage and supply device 100 is again positioned in the store 5 and during its movement towards and away from the building station 2, the engaging device 20 is retained in the first operating position by the action of the spring 24, with the two zones 12 and 13 being fixedly joined to each other in terms of rotation.

In the embodiment described here, the storage and supply device 100, before being used at the building station 2, has the first zone 12 without any winding, in an empty state, while there is supported on the second zone 13 the winding 13a which is formed by an elongate element 3 comprising an elongate element which is connected to a service fabric.

Once it has been joined to the building station 2, the storage and supply device 100 is mounted in abutment against the first and second hubs 19a, 19b on supports of a suitable unwinding device 6 so as to be able to rotate about the axis of rotation X, respectively.

The storage and supply device 100 is therefore connected to the first and second driving members. In particular, the latter connection involves the movement of the engaging device 20 from the first to the second operating configuration, as already explained above, so that the two zones 12 and 13 are mutually independent during the step of rotation about the axis X.

The end of the elongate element 3 is therefore carried to a separation unit of the unwinding device 6 where, by means of a series of rollers, the service fabric 3a is separated and conveyed towards the storage and supply device 100, in particular towards the first zone 12 which is rotated in the opposite direction to the second zone 13.

The second zone 13 is therefore caused to rotate at a suitable rate so as to unwind the second winding 13a and to supply the elongate element 3 to the building station 2. Meanwhile, the first zone 12 is caused to rotate in the opposite direction in order to wind the service fabric 3a which has been separated from the elongate element. It may be noted that, with the progress of the unwinding of the elongate element 3, the rotation rate of the second zone 13 will increase, while the rotation rate of the first zone 12 will progressively decrease.

At the end of the unwinding of the elongate element 3, the storage and supply device 100 has the second zone 13 in an empty state, while a winding 12a which is formed by the service fabric 3a is present in the first zone 12.

The storage and supply device 100 is therefore disassembled from the unwinding device 6, where it is replaced by a new storage and supply device and returned to the store 5.

As an alternative to the example of use described above, there is provision for it to be possible for windings 12a and 13a of different elongate elements, for example without service fabric, to be present on the first and second zones 12, 13.

Furthermore, in another alternative, the bobbin 10 may comprise more than two zones which can be independent or fixed in rotation about the axis of rotation X.

In that case, there are advantageously provided suitable systems for transmitting the movement between external driving members and the different rotation shafts which form the different zones of the central support.

Naturally, a person skilled in the art may apply to the invention described above additional modifications and variants in order to comply with specific and contingent application requirements, which variants and modifications are included within the scope of protection as defined by the appended claims.

## Claims

1. Device (100) for storing and supplying at least one elongate element (3) in a plant for building tyres, said device comprising at least one bobbin (10) which can be moved about a rotation axis (X), said at least one bobbin comprising:
- a first zone (12) which is able to receive a first winding (12a) of a first elongate element,
- a second zone (13) which is able to receive a second winding (13a) of a second elongate element,
- a first rotation shaft (14) which extends along said rotation axis and which is associated with said first zone in order to wind or unwind said first winding,
- a second rotation shaft (15) which is associated with said second zone in order to wind or unwind said second winding,
- an engaging device (20) which is provided between said first rotation shaft (14) and said second rotation shaft (15) and which can be selectively controlled between a first operating configuration, in which said first rotation shaft (14) and said second rotation shaft (15) are fixedly joined to each other in terms of rotation, and a second operating configuration, in which said first rotation shaft (14) and said second rotation shaft (15) can freely rotate independently of each other.

2. Device according to claim 1, wherein said engaging device (20) comprises a first engaging element (21) which is fixedly joined in terms of rotation to said first rotation shaft (14) and a second engaging element (22) which is fixedly joined in terms of rotation to said second rotation shaft (15), said first engaging element (21) being movable with respect to said first rotation shaft towards and away from said second engaging element (22) in order to disengage from said second engaging element or to engage therewith in a coupling manner.

3. Device according to claim 2, wherein said first engaging element (21) is resiliently urged towards the second engaging element (22) in engagement with said second engaging element.

4. Device according to claim 2 or 3, wherein said first engaging element (21) is coaxially received inside said first rotation shaft (14) with the ability to slide axially in a manner limited with respect to said first rotation shaft.

5. Device according to any one of the preceding claims, wherein said first rotation shaft (14) comprises a central core (16) and a first sleeve (17) for supporting said first winding (12a), said first sleeve being fixed coaxially to said central core and having a diameter greater than said central core and wherein said second rotation shaft (15) is rotatably supported on said central core (16) of said first rotation shaft.

6. Device according to any one of the preceding claims, wherein, at a first axial end (11a) of said bobbin (10), said first rotation shaft (14) comprises a first hub (19a) which is able to be supported on an external support of said storage and supply device and wherein there is formed on said first hub (19a) a first seat (25) for receiving in engagement a first coupling element (26) of a first driving member which is provided to rotate said first zone (12) of said bobbin.

7. Device according to any one of the preceding claims, wherein, at a second axial end (11b) of said bobbin (10), said second rotation shaft (15) comprises a second hub (19b) which is able to be supported on an external support of said storage and supply device, and wherein there is formed on said second hub (19b) a second seat (27) for receiving in engagement a second coupling element (28) of a second driving member which is provided to rotate said second zone (13) of said bobbin (10).

8. Device according to claim 7, wherein said second seat (27) is axially open and in communication with said first engaging element (21), so that the insertion in said second seat (27) of said second coupling element (28) of said second driving member brings about the movement of said first engaging element (21) so as to disengage from said second engaging element (22).

9. Device according to any one of the preceding claims, wherein external flanges (31, 32) for supporting said bobbin are mounted on said first rotation shaft (14) and on said second rotation shaft (15), respectively and wherein said external flanges (31, 32) are mounted in the region of said first hub (19a) and said second hub (19b), respectively.

10. Device according to any one of the preceding claims, wherein at least one internal flange (34; 35) for separation between said first zone (12) and said second zone (13) of said bobbin is/are mounted on said first rotation shaft (14) or on said second rotation shaft (15).

11. Method for managing elongate elements in a plant for building tyres, comprising:
- providing a device (100) for storing and supplying at least one elongate element (3) comprising a first rotation shaft (14) and a second rotation shaft (15) which can be controlled selectively between a first operating configuration, in which said first rotation shaft and said second rotation shaft are fixedly joined to each other in terms of rotation, and a second operating configuration, in which said first rotation shaft and said second rotation shaft can freely rotate independently of each other,
- maintaining said first rotation shaft (14) and said second rotation shaft (15) in said first operating configuration when said device (100) is in storage and transport operation and
- moving said first rotation shaft (14) and said second rotation shaft (15) into said second operating configuration when said device (100) is in the course of winding or unwinding said at least one elongate element on or from said first rotation shaft or said second rotation shaft.

12. Method according to claim 11, wherein said storage and supply device (100) supplies said at least one elongate element (3) to at least one tyre building station (2).

13. Method according to claim 12, wherein said storage and supply device (100) supplies to said building station (2) a first elongate element which is wound on said first rotation shaft (14) and a second elongate element which is wound on said second rotation shaft (15).

14. Method according to claim 12, wherein said storage and supply device (100) supplies a first elongate element (3) to said building station (2) by unwinding it from one of said first and second rotation shafts and takes a second elongate element (3a) by winding it on the other of said first and second rotation shafts.

15. Method according to claim 14, wherein said second elongate element (3a) is a service fabric which is coupled to said first elongate element (3) when it is wound on said first or second rotation shaft and wherein said service fabric (3a) is separated from said first elongate element (3) when it is unwound from said first or second rotation shaft in order to be supplied to said building station (2).

## Patentansprüche

1. Einrichtung (100) zum Speichern und Zuführen zumindest eines länglichen Elements (3) in einer Anlage zur Fertigung von Reifen, wobei die Einrichtung zumindest eine Haspel (10) umfasst, die um eine Drehachse (X) bewegt werden kann, wobei die zumindest eine Haspel umfasst:
- eine erste Zone (12), die in der Lage ist, eine erste Wicklung (12a) eines ersten länglichen Elements aufzunehmen,
- eine zweite Zone (13), die in der Lage ist, eine zweite Wicklung (13a) eines zweiten länglichen Elements aufzunehmen.
- eine erste Drehwelle (14), die sich entlang der Drehachse erstreckt und der ersten Zone zugeordnet ist, um die erste Wicklung auf- oder abzuwickeln,
- eine zweite Drehwelle (15), die der zweiten Zone zugeordnet ist, um die zweite Wicklung auf- oder abzuwickeln,
- eine Einrückeinrichtung (20), die zwischen der ersten Drehwelle (14) und der zweiten Drehwelle (15) vorgesehen ist und selektiv gesteuert werden kann zwischen einer ersten Betriebskonfiguration, in der die erste Drehwelle (14) und die zweite Drehwelle (15) relativ zueinander drehfest verbunden sind, und einer zweiten Betriebskonfiguration, in der sich die erste Drehwelle (14) und die zweite Drehwelle (15) frei und unabhängig voneinander drehen können.

2. Einrichtung nach Anspruch 1, wobei die Einrückeinrichtung (20) ein erstes Einrückelement (21) umfasst, das drehfest mit der ersten Drehwelle (14) verbunden ist, sowie ein zweites Einrückelement (22), das drehfest mit der zweiten Drehwelle (15) verbunden ist, wobei das erste Einrückelement (21) in Bezug auf die erste Drehwelle zu dem zweiten Einrückelement (22) hin und davon wegbewegbar ist, um aus dem zweiten Einrückelement auszurücken oder zur Kopplung in dieses einzurücken.

3. Einrichtung nach Anspruch 2, wobei das erste Einrückelement (21) elastisch zu dem zweiten Einrückelement (22) hin in den Eingriff mit dem zweiten Einrückelement gedrängt wird.

4. Einrichtung nach Anspruch 2 oder 3, wobei das erste Einrückelement (21) koaxial innerhalb der ersten Drehwelle (14) aufgenommen ist, mit der Fähigkeit, axial auf in Bezug auf die erste Drehwelle begrenzte Weise zu gleiten.

5. Einrichtung nach einem der vorhergehenden Ansprüche, wobei die erste Drehwelle (14) einen zentralen Kern (16) und eine erste Hülse (17) zum Tragen der ersten Wicklung (12a) umfasst, wobei die Hülse koaxial in Bezug auf den zentralen Kern fixiert ist und einen größeren Durchmesser aufweist als der zentrale Kern, und wobei die zweite Drehwelle (15) drehbar an dem zentralen Kern (16) der ersten Drehwelle getragen wird.

6. Einrichtung nach einem der vorhergehenden Ansprüche, wobei an einem ersten axialen Ende (11a) der Haspel (10) die erste Drehwelle (14) eine erste Nabe (19a) umfasst, die in der Lage ist, an einem äußeren Träger der Speicher- und Zuführeinrichtung getragen zu werden, und wobei an der ersten Nabe (19a) ein erster Sitz (25) zur Aufnahme eines ersten Kupplungselements (26) eines ersten Antriebselements in Eingriff ausgebildet ist, das vorgesehen ist, um die erste Zone (12) der Haspel zu drehen.

7. Einrichtung nach einem der vorhergehenden Ansprüche, wobei an einem zweiten axialen Ende (11b) der Haspel (10) die zweite Drehwelle (15) eine zweite Nabe (19b) umfasst, die in der Lage ist, an einem äußeren Träger der Speicher- und Zuführeinrichtung getragen zu werden, und wobei an der zweiten Nabe (19b) ein zweiter Sitz (27) zur Aufnahme eines zweiten Kupplungselements (28) eines zweiten Antriebselements in Eingriff ausgebildet ist, das vorgesehen ist, um die zweite Zone (13) der Haspel (10) zu drehen.

8. Einrichtung nach Anspruch 7, wobei der zweite Sitz (27) axial offen ist und mit dem ersten Einrückelement (21) in Verbindung steht, so dass die Einführung in den zweiten Sitz (27) des zweiten Kupplungselements (28) des zweiten Antriebselements die Bewegung des ersten Einrückelements (21) zum Ausrücken aus dem zweiten Einrückelement (22) mit sich bringt.

9. Einrichtung nach einem der vorhergehenden Ansprüche, wobei äußere Flansche (31, 32) zum Tragen der Haspel jeweils an der ersten Drehwelle (14) und an der zweiten Drehwelle (15) montiert sind, und wobei die äußeren Flansche (31, 32) jeweils im Bereich der ersten Nabe (19a) und der zweiten Nabe (19b) montiert sind.

10. Einrichtung nach einem der vorhergehenden Ansprüche, wobei zumindest ein innerer Flansch (34; 35) zur Trennung zwischen der ersten Zone (12) und der zweiten Zone (13) der Haspel an der ersten Drehwelle (14) oder an der zweiten Drehwelle (15) montiert ist.

11. Verfahren zur Verwaltung länglicher Elemente in einer Anlage zur Fertigung von Reifen, wobei das Verfahren folgende Schritte umfasst:
- Bereitstellen einer Einrichtung (100) zum Speichern und Zuführen zumindest eines länglichen Elements (3), umfassend eine erste Drehwelle (14) und eine zweite Drehwelle (15), die selektiv gesteuert werden können zwischen einer ersten Betriebskonfiguration, in der die erste Drehwelle und die zweite Drehwelle relativ zueinander drehfest verbunden sind, und einer zweiten Betriebskonfiguration, in der sich die erste Drehwelle und die zweite Drehwelle frei und unabhängig voneinander drehen können.
- Halten der ersten Drehwelle (14) und der zweiten Drehwelle (15) in der ersten Betriebskonfiguration, wenn die Einrichtung (100) im Speicher- und Transportbetrieb ist, und
- Bewegen der ersten Drehwelle (14) und der zweiten Drehwelle (15) in die zweite Betriebskonfiguration, wenn die Einrichtung (100) sich im Vorgang des Auf- oder Abwickelns des zumindest eines länglichen Elements auf oder von der ersten Drehwelle oder der zweiten Drehwelle befindet.

12. Verfahren nach Anspruch 11, wobei die Speicher- und Zuführeinrichtung (100) das zumindest eine längliche Element (3) an zumindest eine Reifen-Fertigungsstation (2) zuführt.

13. Verfahren nach Anspruch 12, wobei die Speicher- und Zuführeinrichtung (100) ein erstes längliches Element, das auf die erste Drehwelle (14) gewickelt wird, und ein zweites längliches Element, das auf die zweite Drehwelle (15) gewickelt wird, an die Fertigungsstation (2) zuführt.

14. Verfahren nach Anspruch 12, wobei die Speicher- und Zuführeinrichtung (100) ein erstes längliches Element (3) an die Fertigungsstation (2) zuführt, indem sie es von einer der ersten und zweiten Drehwellen abwickelt, und ein zweites längliches Element (3a) aufnimmt, indem es dieses auf die andere der ersten und zweiten Drehwellen aufwickelt.

15. Verfahren nach Anspruch 14, wobei das zweite längliche Element (3a) ein Hilfsgewebe ist, das mit dem ersten länglichen Element (3) gekoppelt ist, wenn es auf die erste oder zweite Drehwelle gewickelt wird, und wobei das Hilfsgewebe (3a) von dem ersten länglichen Element (3) getrennt wird, wenn es von der ersten oder zweiten Drehwelle abgewickelt wird, um an die Fertigungsstation (2) zugeführt zu werden.

## Revendications

1. Dispositif (100) de stockage et d'acheminement d'au moins un élément allongé (3) dans une installation de construction de pneus, ledit dispositif comprenant au moins une bobine (10) qui peut se déplacer autour d'un axe de rotation (X), ladite au moins une bobine comprenant :
- une première zone (12) qui est capable de recevoir un premier enroulement (12a) d'un premier élément allongé,
- une deuxième zone (13) qui est capable de recevoir un deuxième enroulement (13a) d'un deuxième élément allongé,
- un premier arbre de rotation (14) qui s'étend le long dudit axe de rotation et qui est associé à ladite première zone afin d'enrouler ou de dérouler ledit premier enroulement,
- un deuxième arbre de rotation (15) qui est associé à ladite deuxième zone afin d'enrouler ou de dérouler ledit deuxième enroulement,
- un dispositif d'engagement (20) qui est prévu entre ledit premier arbre de rotation (14) et ledit deuxième arbre de rotation (15) et qui peut être commandé sélectivement entre une première configuration de fonctionnement, dans laquelle ledit premier arbre de rotation (14) et ledit deuxième arbre de rotation (15) sont solidaires l'un de l'autre en rotation, et une deuxième configuration de fonctionnement, dans laquelle ledit premier arbre de rotation (14) et ledit deuxième arbre de rotation (15) peuvent tourner librement indépendamment l'un de l'autre.

2. Dispositif selon la revendication 1, dans lequel ledit dispositif d'engagement (20) comprend un premier élément d'engagement (21) qui est solidaire en rotation dudit premier arbre de rotation (14) et un deuxième élément d'engagement (22) qui est solidaire en rotation dudit deuxième arbre de rotation (15), ledit premier élément d'engagement (21) étant mobile par rapport audit premier arbre de rotation vers ledit deuxième élément d'engagement (22) et à l'écart de celui-ci afin de se désengager dudit deuxième élément d'engagement ou de s'engager avec celui-ci de manière couplée.

3. Dispositif selon la revendication 2, dans lequel ledit premier élément d'engagement (21) est sollicité élastiquement vers le deuxième élément d'engagement (22) en engagement avec ledit deuxième élément d'engagement.

4. Dispositif selon la revendication 2 ou 3, dans lequel ledit premier élément d'engagement (21) est reçu de manière coaxiale à l'intérieur dudit premier arbre de rotation (14) avec la possibilité de coulisser axialement de manière limitée par rapport audit premier arbre de rotation.

5. Dispositif selon l'une quelconque des revendications précédentes, dans lequel ledit premier arbre de rotation (14) comprend un noyau central (16) et un premier manchon (17) pour supporter ledit premier enroulement (12a), ledit premier manchon étant fixé de manière coaxiale audit noyau central et ayant un diamètre supérieur à celui dudit noyau central et où ledit deuxième arbre de rotation (15) est supporté en rotation sur ledit noyau central (16) dudit premier arbre de rotation.

6. Dispositif selon l'une quelconque des revendications précédentes, dans lequel, au niveau d'une première extrémité axiale (11a) de ladite bobine (10), ledit premier arbre de rotation (14) comprend un premier moyeu (19a) qui peut être supporté sur un support externe dudit dispositif de stockage et d'acheminement et dans lequel est formé sur ledit premier moyeu (19a) un premier siège (25) pour recevoir en engagement un premier élément de couplage (26) d'un premier organe d'entraînement qui est prévu pour faire tourner ladite première zone (12) de ladite bobine.

7. Dispositif selon l'une quelconque des revendications précédentes, dans lequel, au niveau d'une deuxième extrémité axiale (11b) de ladite bobine (10), ledit deuxième arbre de rotation (15) comprend un deuxième moyeu (19b) qui peut être supporté sur un support externe dudit dispositif de stockage et d'acheminement, et dans lequel est formé sur ledit deuxième moyeu (19b) un deuxième siège (27) pour recevoir en engagement un deuxième élément de couplage (28) d'un deuxième organe d'entraînement qui est prévu pour faire tourner ladite deuxième zone (13) de ladite bobine (10).

8. Dispositif selon la revendication 7, dans lequel ledit deuxième siège (27) est axialement ouvert et en communication avec ledit premier élément d'engagement (21), de sorte que l'insertion dans ledit deuxième siège (27) dudit deuxième élément de couplage (28) dudit deuxième organe d'entraînement entraîne le mouvement dudit premier élément d'engagement (21) de manière à se désengager dudit deuxième élément d'engagement (22).

9. Dispositif selon l'une quelconque des revendications précédentes, dans lequel des brides externes (31, 32) pour supporter ladite bobine sont montées sur ledit premier arbre de rotation (14) et sur ledit deuxième arbre de rotation (15), respectivement et dans lequel lesdites brides externes (31, 32) sont montées dans la région dudit premier moyeu (19a) et dudit deuxième moyeu (19b), respectivement.

10. Dispositif selon l'une quelconque des revendications précédentes, dans lequel au moins une bride interne (34 ; 35) pour la séparation entre ladite première zone (12) et ladite deuxième zone (13) de ladite bobine est/sont montée(s) sur ledit premier arbre de rotation (14) ou sur ledit deuxième arbre de rotation (15).

11. Procédé de gestion d'éléments allongés dans une installation de construction de pneus, comprenant le fait :
- de fournir un dispositif (100) pour stocker et acheminer au moins un élément allongé (3) comprenant un premier arbre de rotation (14) et un deuxième arbre de rotation (15) qui peuvent être commandés sélectivement entre une première configuration de fonctionnement, dans laquelle ledit premier arbre de rotation et ledit deuxième arbre de rotation sont solidaires l'un de l'autre en rotation, et une deuxième configuration de fonctionnement, dans laquelle ledit premier arbre de rotation et ledit deuxième arbre de rotation peuvent tourner librement indépendamment l'un de l'autre,
- de maintenir ledit premier arbre de rotation (14) et ledit deuxième arbre de rotation (15) dans ladite première configuration de fonctionnement lorsque ledit dispositif (100) se trouve dans une action de stockage et de transport et
- de déplacer ledit premier arbre de rotation (14) et ledit deuxième arbre de rotation (15) dans ladite deuxième configuration de fonctionnement lorsque ledit dispositif (100) est en train d'enrouler ou de dérouler ledit au moins un élément allongé sur ou depuis ledit premier arbre de rotation ou ledit deuxième arbre de rotation.

12. Procédé selon la revendication 11, dans lequel ledit dispositif de stockage et d'acheminement (100) achemine ledit au moins un élément allongé (3) vers au moins une station de construction de pneu (2).

13. Procédé selon la revendication 12, dans lequel ledit dispositif de stockage et d'acheminement (100) achemine vers ladite station de construction (2) un premier élément allongé qui est enroulé sur ledit premier arbre de rotation (14) et un deuxième élément allongé qui est enroulé sur ledit deuxième arbre de rotation (15).

14. Procédé selon la revendication 12, dans lequel ledit dispositif de stockage et d'acheminement (100) achemine un premier élément allongé (3) vers ladite station de construction (2) en le déroulant depuis l'un desdits premier et deuxième arbres de rotation et prend un deuxième élément allongé (3a) en l'enroulant sur l'autre arbre desdits premier et deuxième arbres de rotation.

15. Procédé selon la revendication 14, dans lequel ledit deuxième élément allongé (3a) est un tissu de service qui est couplé audit premier élément allongé (3) lorsqu'il est enroulé sur ledit premier ou deuxième arbre de rotation et dans lequel ledit tissu de service (3a) est séparé dudit premier élément allongé (3) lorsqu'il est déroulé depuis ledit premier ou deuxième arbre de rotation pour être acheminé vers ladite station de construction (2).
